# NEUE EUROPÄISCHE PATENTSCHRIFT

(11) **EP 1 712 266 B2**
(45) Veröffentlichungstag und Bekanntmachung des Hinweises auf die Entscheidung über den Einspruch: **11.01.2012**
(45) Hinweis auf die Patenterteilung: 25.06.2008
(21) Anmeldenummer: 06112589.4
(22) Anmeldetag: 13.04.2006
(51) Int. Cl.: B01D 46/24, B01D 46/52

(54) **Filtersystem**
Filter system
Système de filtration

(30) Priorität: 15.04.2005 DE 102005017638
(43) Veröffentlichungstag der Anmeldung: 18.10.2006
(73) Patentinhaber: MANN+HUMMEL GmbH, 71638 Ludwigsburg (DE)
(72) Erfinder: Trautmann, Pius,Dr., 70499 Stuttgart (DE); Hoppe, Anders-Christian, 71720 Oberstenfeld (DE); Pfeiffer, Frank, Dr., 71297 Mönsheim (DE)
(74) Vertreter: Maiwald Patentanwalts GmbH

(56) Entgegenhaltungen:
- WO-A-2004/020075
- US-A1- 2005 022 669

## Beschreibung

### Technisches Gebiet

Die Erfindung betrifft ein Filterelement nach dem Oberbegriff des Anspruches 1.

### Stand der Technik

In der Druckschrift US 6 322 602 B2 wird ein Luftfilter beschrieben, der in einem zylindrischen Filtergehäuse ein axial zu durchströmendes Filterelement aufweist. Der Aufnahmeraum zur Aufnahme des Filters im Filtergehäuse ist an einer axialen Stirnseite im Bereich der Anströmseite des Filters von einem Gehäusedeckel zu verschließen, welcher zum Austausch des Filterelements gelöst wird, woraufhin das Filterelement aus dem Aufnahmeraum axial herausgenommen und durch ein neues Filterelement ersetzt werden kann.

Diese Ausführung weist den Nachteil auf, dass zum Austausch des Filterelements der Gehäusedeckel im Anströmbereich entfernt werden muss, was zunächst eine Demontage des gesamten Filtergehäuses aus seiner Einbauposition voraussetzt, weil der Gehäusedeckel mit den Zuleitungen für die Zufuhr der zu reinigenden Luft verbunden ist. Ein Austausch des Filterelementes ist daher nur mit einem erheblichen Aufwand zu bewerkstelligen, wodurch die Wartungsdauer ansteigt und erhebliche Wartungskosten anfallen.

Es wird ferner in der W02004/020075 ein Filtersystem, insbesondere für die Ansaugluft einer Brennkraftmaschine, vorgeschlagen. Dieses besteht aus einem Gehäuse mit wenigstens zwei Gehäuseteilen, wobei das Gehäuse im Bereich der Befestigung des Filterelements teilbar ist und wobei das Filterelement aus einem Wickelfilter besteht.

Der Wickelfilter weist am Umfang eine Profildichtung auf. Diese Profildichtung besteht aus einem elastischen Band, welches wulstförmig gestaltet ist. Über diesen Wulst sind die beiden Gehäuseteile einspannbar.

Aus der US 2005-0022669 ist eine Filtereinrichtung bekannt. Diese beschreibt einen Wickelfilter, der einen umlaufenden Rahmen aufweist. Über diesen Rahmen ist eine Dichtung gestülpt. Die Dichtung liegt in eingebautem Zustand des Filters an einer Innenwandung des Gehäuses an. Der Rahmen hält dabei die Dichtung in einer Position, die ein Abdichten des Filterelementes bzw. der Rohluftseite gegenüber der Reinluftseite bewirkt. Ein Nachteil bei dieser Anordnung besteht darin, dass der Rahmen relativ steif sein muss, um eine zuverlässige Abdichtung zu gewährleisten.

### Offenbarung der Erfindung

Der Erfindung liegt die Aufgabe zugrunde, die genannten Nachteile zu vermeiden und ein Filterelement zu schaffen, welches den Stand der Technik weiterbildet.

Diese Aufgabe wird ausgehend von dem Oberbegriff des unabhängigen Anspruches 1 durch dessen kennzeichnende Merkmale gelöst.

Der wesentliche Vorteil der Erfindung liegt darin, dass ein Dichtring unmittelbar an der Stirnseite des Wickelfilters angeordnet ist und dieser in einer einteiligen Aufnahme des Gehäuses axial bzw. radial verpresst wird.

Die Form der Aufnahme ist durch die Einteiligkeit festgelegt und derart definiert, dass eine bestimmte Verpressung erzielt wird. Der Vorteil dieser definierten Form liegt in der hohen Prozesssicherheit im Filtrationsbetrieb.

Gemäß einer Ausgestaltung des Gehäuses ist die Aufnahme des Gehäuses eine Kammer in Form einer Nut. Der Dichtring füllt diese Nut vollständig aus.

Der Dichtring weist eine Konische, rechteckige oder quadratische Form auf. So dass ein einfacheres Einführen und auch ein einfacheres Entfernen des Dichtrings aus der Nut möglich sind.

In einer Ausgestaltung des Filterelements ist dieser ein Wickelfilter mit einem Kern als Kunststoffplatte. Diese Kunststoffplatte kann einen Haltegriff beinhalten, der sich axial ausgehend von dem Wickelfilter nach außen erstreckt und mit dem ein einfaches Handhaben des Wickelfilters möglich wird.

Ein Filtersystem, insbesondere für die Ansaugluft einer Brennkraftmaschine, kann bestehend aus einem Gehäuse mit wenigstens zwei Gehäuseteilen. Der in dem Gehäuse angeordnete Wickelfilter ist in einem Gehäuseteil, und zwar dort in einer entsprechend gestalteten Aufnahme des Gehäuses, einbettbar.

Ein Vorfilter kann dem Filterelement vorgeschaltet sein. Ein solcher Vorfilter hat die Aufgabe, Grobschmutz abzuscheiden und besteht beispielsweise aus einer Mehrzahl von Zyklonen.

Der Filterelement kann einen Sekundärfilter nachgeschaltet sein. Dieser Sekundärfilter hat die Aufgabe, bei einem Austausch des Filterelements den Eintrag von Partikeln in die Reinluftleitung zu verhindern.

Zur einfachen Montage und Demontage des Filterelements ist das Gehäuse derart zweigeteilt, dass sich im Bereich der Befestigung des Filterelements der Verbindungsflansch oder Verbindungselemente befinden.

### Kurze Beschreibung der Zeichnungen

Die Erfindung wird nachfolgend anhand von Ausführungsbeispielen näher erläutert. Es zeigen:
Fig. 1a eine Teilschnittdarstellung eines Filterelements,
Fig. 1b eine Draufsicht auf die in Fig. 1a gezeigte Teilschnittdarstellung, und
Fig. 2 ein Filtersystem in einer Schnittdarstellung.

### Ausführungsform(en) der Erfindung

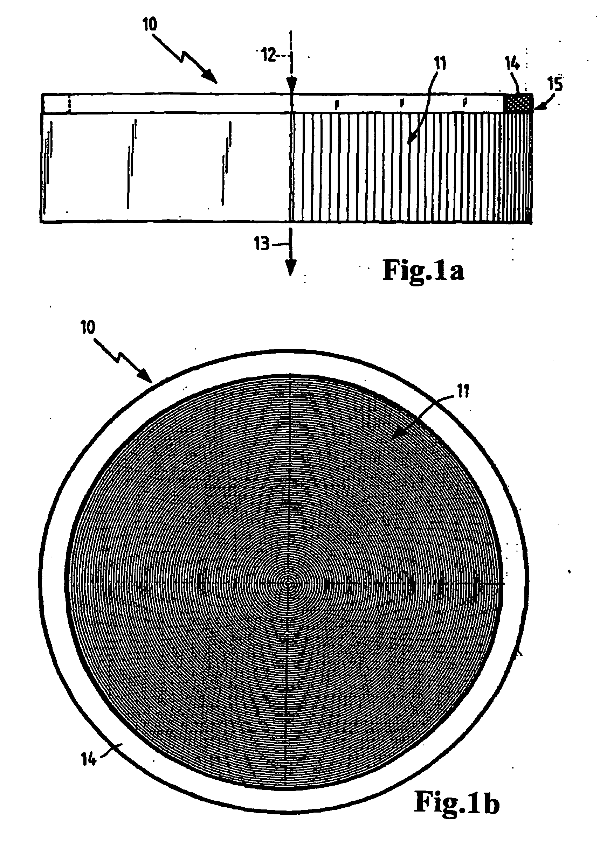

Die Darstellung gemäß Fig. 1a zeigt einen Filtereinsatz 10 mit einem Filterwickel 11, der aus einem gewellten Filterpapier oder Filtervlies besteht.

Durch die Wellenform entstehen längsgerichtete Kanäle. Diese Kanäle sind wechselseitig verschlossen, so dass die einströmende Luft gemäß Pfeil 12 in die oben geöffneten Kanäle einströmt, das Filtermedium, d.h. das Filterpapier oder Filtervlies, durchdringt und gemäß Pfeil 13 gereinigt nach unten abströmt.

Der gesamte Filterwickel wird an der Stirnseite von einer rechteckig geformten Dichtung 14 umgeben. Diese Dichtung besteht beispielsweise aus PUR-Schaum oder aus einem Elastomer und ist umlaufend mit dem Filterwickel verklebt. Die Dichtung weist einen Dichtungsfuß 15 auf, der die Verbindung zwischen Filterwickel und Dichtung 14 herstellt und eine optimale Verbindung zu dem Filterwickel gewährleistet.

Fig. 1b zeigt in der Draufsichtdarstellung den Filterwickel 11, der ausgehend von einem Filterkern endlos gewickelt ist und im äußeren Bereich die Dichtung 14 trägt.

Die Herstellung eines solchen Elements ist besonders wirtschaftlich. Der Vorteil des Elements liegt in der hohen wirksamen Filterfläche.

Es besteht auch die Möglichkeit, im Kern des Wickelfilters eine Kunststoffplatte oder einen Kunststoffrohrstutzen anzuordnen, der insbesondere mit einem Haltegriff versehen ist, zum vereinfachten Ein- und/oder Ausbau des Filterelements.

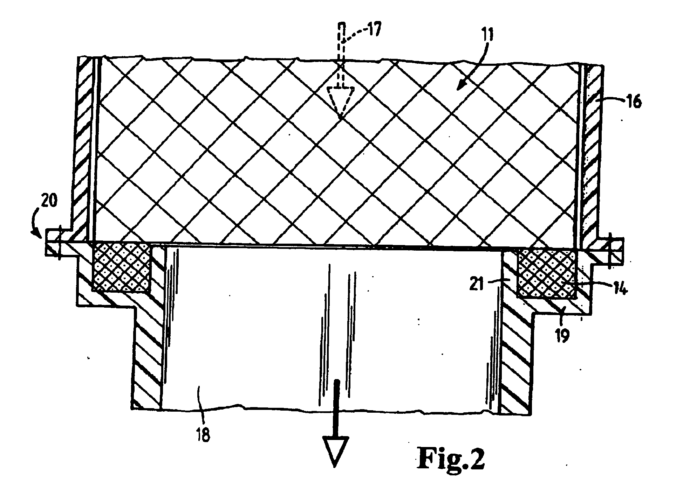

Fig. 2 zeigt ein Filterelement 11 in einem Gehäuse. Gleiche Teile sind mit gleichen Bezugszeichen versehen. Das Gehäuse 16 besteht beispielsweise aus Kunststoff und weist eine konzentrische Form auf, ebenso wie das Filterelement selbst.

Das Filterelement wird gemäß dem Pfeil 17 von Luft durchströmt. Die Reinluft strömt nach unten über die dargestellte Öffnung 18.

Das Filterelement selbst besitzt an seiner Stirnseite die Dichtung 14. Diese wird von dem Gehäuseteil 19 aufgenommen, das im inneren Bereich eine umlaufende Rippe aufweist. Das Gehäuse ist in der hier dargestellten Form zweiteilig aufgebaut und besteht aus dem oberen Gehäuse 16 und dem Gehäuseteil 19 und wird im Flanschbereich 20 zum Austausch des Filterelements 11 geöffnet.

Die PUR-Dichtung 14 wird nahezu vollständig aufgrund der umlaufenden Rippe 21 umschlossen, so dass zwischen dem Gehäuseteil 19 mit der Rippe 21 eine Kammerung entsteht. Durch die eintretende Verpressung der Dichtung 14 wird die Reinluftseite des Luftfilters von der Rohrluftseite getrennt. Das Dichtkonzept kommt ohne Verstärkungsrahmen aus Kunststoff aus.

Auf der gegenüberliegenden Seite des Filterelements kann, falls erforderlich, ebenfalls dieses Dichtkonzept verwendet werden. Dort dient es dann zur Lagefixierung des Kompaktluftfilters im Luftfiltergehäuse.

## Patentansprüche

1. Filterelement (11), insbesondere zur Filtrierung der Ansaugluft einer Brennkraftmaschine, bestehend aus einem Wickelfilter, wobei der Wickelfilter axial durchströmt ist und wenigstens an seiner Stirnseite einen Dichtring (14) aufweist und wobei dieser Dichtring (14) mit dem Wickelfilter über eine Schweiss-, Klebe-, Extrusions- oder Schmelzverbindung verbunden ist, wobei der Dichtring (14) eine rechteckige, quadratische oder konische Form aufweist, wobei der Dichtring sich in eine entsprechend gestaltete nutförmige Aufnahme eines Gehäuseteils einfügt und eine radiale und/oder axiale Positionierung des Wickelfilters bewirkt, **dadurch gekennzeichnet, dass** der Dichtring (14) unmittelbar an der Stirnseite des Wickelfilters angeordnet ist und in der nutförmigen Aufnahme des Gehäuseteils axial und/oder radial verpresst ist.

2. Filterelement nach Anspruch 1, **dadurch gekennzeichnet, dass** der Wickelfilter als Kern eine Kunststoffplatte aufweist, die insbesondere einen Haltegriff beinhaltet, der sich axial ausgehend von dem Wickelfilter nach aussen erstreckt.

## Claims

1. A filter element (11), in particular for filtering the intake air of an internal combustion engine, consisting of a coiled filter, wherein the coiled filter carries an axial flow, and at least its front face exhibits a sealing ring (14), and wherein this sealing ring (14) is connected with the coiled filter by way of a welded, adhesive, extruded or melt bond, wherein the sealing ring (14) exhibits a rectangular, square or conical shape, wherein the sealing ring is inserted into a correspondingly configured, grooved receptacle of a housing section, and causes a radial and/or axial positioning of the winding filter, **characterized in that** the sealing ring (14) is situated immediately at the front face of the coiled filter, and axially and/or radially pressed into the grooved receptacle of the housing section.

2. The filter element according to claim 1, **characterized in that** the coiled filter exhibits as the core a plastic plate, which in particular comprises a handle that extends axially outward proceeding from the coiled filter.

## Revendications

1. Elément filtrant (11), en particulier pour la filtration de l'air d'admission d'un moteur à combustion interne, constitué d'un filtre à enroulement, élément filtrant dans lequel le filtre à enroulement est balayé dans la direction axiale et présente au moins sur son côté frontal une bague d'étanchéité (14) et cette bague d'étanchéité (14) est assemblée avec le filtre à enroulement par soudage, collage, extrusion ou fusion, la bague d'étanchéité (14) présentant une forme rectangulaire, carrée ou conique, la bague d'étanchéité s'insérant dans un logement en forme de gorge de configuration appropriée d'une partie de boîtier et provoque un positionnement radial et/ou axial du filtre à enroulement, **caractérisé en ce que** la bague d'étanchéité (14) est disposée directement sur le côté frontal du filtre à enroulement et est pressée dans la direction axiale et/ou radiale dans le logement en forme de gorge de la partie de boîtier.

2. Elément filtrant selon la revendication 1, **caractérisé en ce que** le filtre à enroulement présente en tant que coeur une plaque de matière plastique, qui comporte en particulier une poignée de maintien s'étendant dans la direction axiale vers l'extérieur à partir du filtre à enroulement.
